(19) Europäisches Patentamt
European Patent Office
Office européen des brevets

(11) Veröffentlichungsnummer: **0 366 009 A1**

(12) # EUROPÄISCHE PATENTANMELDUNG

(21) Anmeldenummer: 89119459.9

(51) Int. Cl.5: **A01N 55/00 , A01N 57/34**

(22) Anmeldetag: 20.10.89

(30) Priorität: 28.10.88 DE 3836757

(43) Veröffentlichungstag der Anmeldung: 02.05.90 Patentblatt 90/18

(84) Benannte Vertragsstaaten: AT BE CH DE ES FR GB GR IT LI NL SE

(71) Anmelder: BASF Aktiengesellschaft
Carl-Bosch-Strasse 38
D-6700 Ludwigshafen(DE)

(72) Erfinder: Huettinger, Klaus J., Prof.-Dr.
Max-Beckmann-Strasse 25
D-7500 Karlsruhe(DE)
Erfinder: Rapp, Adolf, Prof.-Dr.
Burgenring 53
D-6747 Annweile(DE)
Erfinder: Schnell, Michael, Prof.-Dr.
Bahnhofstrasse 7
D-6740 Landau 14(DE)
Erfinder: Ammermann, Eberhard, Dr.
Sachsenstrasse 3
D-6700 Ludwigshafen(DE)
Erfinder: Lorenz, Gisela, Dr.
Erlenweg 13
D-6730 Neustadt(DE)

(54) **Fungizid für den Pflanzenschutz.**

(57) Fungizide Mittel für den Pflanzenschutz enthaltend Verbindungen mit mindestens einem Molekülteil mit einer Haftaffinität zur Oberfläche von Pflanzen (Blätter, Früchte, Stengel) sowie mindestens einem bioziden Molekülteil, wobei der für die Haftaffinität verantwortliche Molekülteil eine Silanverbindung ist. Besonders geeignet sind Verbindungen der Formel

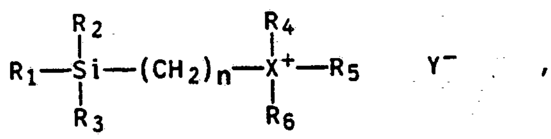

worin $R_1$ bis $R_3$ Niederalkoxygruppen mit 1 bis 4, insbesondere ein oder 2 C-Atome sind, mit der Maßgabe, daß mindestens eine der Gruppen $R_4$ bis $R_6$ eine Alkylgruppe mit mindestens 10 C-Atomen ist, und X Phosphor oder Stickstoff und $Y^-$ ein Anion einer organischen oder anorganischen Säure ist, und n den Wert 1 bis 10 hat, und Verfahren zur Bekämpfung von Pilzen mit diesen Verbindungen.

EP 0 366 009 A1

## Fungizid für den Pflanzenschutz

Die Erfindung betrifft ein Fungizid für den protektiven Pflanzenschutz enthaltend eine quartäre Siliciumverbindung und Verfahren zur Pilzbekämpfung mit diesen Verbindungen.

Die im Pflanzenschutz eingesetzten Fungizide werden aufgrund ihrer Wirkungsart in sogenannte protektiv, locosystemisch und systemisch wirkende Mittel eingeteilt. Nimmt man die Einteilung nach der Anwendungsart bzw. nach dem Wirkungsort vor, so wird auch zwischen Blatt- und Bodenfungiziden unterschieden. Der Begriff Blattfungizid schließt auch die Anwendung der Mittel auf Stengel und Früchten der Pflanze mit ein. Wirken die Mittel nicht fungizid, sondern nur fungistatisch, so spricht man auch von Fungistatika. Bei den protektiv wirkenden Fungistatika bzw. Fungiziden handelt es sich somit um Produkte, die auf Blätter, Stengel und Früchte aufgebracht werden mit dem Ziel, den Pilzbefall und damit die Schädigung der Pflanze und der Früchte zu verhindern. Die meisten der heute gebräuchlichen Fungistatika und Fungizide wirken auf diese Weise, d.h. sie müssen vorbeugend aufgebracht werden. Es sind nur wenige Fälle aus der Phytotherapie bekannt, wo eine bereits ausgebrochene Krankheit bekämpft werden kann.

Beispiele für protektiv wirkende Fungizide sind Kupfersulfat $CuSO_4$ oder Kupferoxychlorid CuOCl. Zu den älteren Fungistatika oder Fungiziden gehören auch elementarer Schwefel und Polysulfidpräparate. In neuerer Zeit werden zunehmend organische Verbindungen wie z.B. Metallsalze der Dithiocarbamidsäure (Zineb, Maneb, Propineb) verwendet. Gemäß ihrer Wirkungsart müssen sie auf die Wirtspflanzen aufgebracht sein, bevor der Kontakt zwischen den Kulturpflanzen und den Sporen phytopathogener Pilze erfolgt. Wünschenswert wäre, daß diese Fungizide einen dauernden Kontakt zur Pflanzenoberfläche haben. Diese Eigenschaft besitzen bekannte Fungizide trotz permanenter Neuentwicklung von Produkten nicht; bei langanhaltenden Regenfällen werden sie abgewaschen. Die Folge ist, daß die Behandlung der Pflanzen pro Saison mehrfach, zum Teil zehnfach oder mehr wiederholt werden muß. Ein typisches Beispiel ist der Weinbau.

Es ist bekannt, Siliciumverbindungen mit einer quartären Ammoniumgruppe z.B. N-[3-(Trimethoxysilyl)-propyl]-N,N-didecyl-N-methylammoniumchlorid oder N-[(3-(Trimethylsilyl)-propyl]-N,N-dimethyl-N-octadecylammoniumchlorid für die Wasserentkeimung oder ähnliche Verbindungen zur Bekämpfung von Mikroorganismen bei Pflanzen oder zur Bekämpfung von Algen in wäßrigen Medien zu verwenden (US-3 730 701, WO 87/00006, Chemiker Zeitung 111, 213 - 220 (1987). Ihre Wirkung bei der vorbeugenden Bekämpfung von Pilzen im Pflanzenschutz ist entweder nicht bekannt oder unbefriedigend.

Es wurde nun gefunden, daß durch Verwendung spezieller protektiv wirkender Fungizide bei nur wenigen Behandlungen z.B. einmaliger Behandlung der Pflanzen ein dauerhafter Schutz vor Pilzbefall gegeben ist. Bei den gefundenen protektiv wirkenden Fungiziden handelt es sich um solche Verbindungen, die neben der toxiphoren Gruppe, also der fungizid wirkenden Gruppe, eine Trialkoxysilylgruppe besitzen. Diese Trialkoxysilylgruppe bewirkt offensichtlich eine derart starke Haftung auf der Pflanzen- und Fruchtoberfläche, daß ein Abwaschen auch bei intensiven, tagelangen Regenfällen nicht erfolgt. Untersuchungen an Reben haben beispielsweise gezeigt, daß Beeren und Blätter nach Behandlung einen leichten Glanz besitzen, der mit fortschreitendem Wachstum und auch nach starken Regenfällen unverändert erhalten bleibt. Durch diese Beobachtung ist primär nachgewiesen, daß die verwendeten Fungizide auf der Pflanzenoberfläche dauerhaft haften. Die Anwendung des fungiziden Mittels erfolgt vor der Infektion der Pflanzen, d.h. prophylaktisch oder protektiv.

Bei den beschriebenen Versuchen wurden Produkte verwendet, die neben der für die Haftung verantwortlichen Trialkoxysilylgruppe als fungistatisch bzw. fungizid wirkende Gruppe verschiedene Onium-Reste besitzen. Bei diesen Onium-Verbindungen handelte es sich um quaternäre Phosphonium- und insbesondere Ammoniumverbindungen mit anorganischen und organischen Gegenionen der Formel

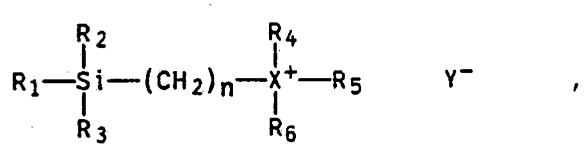

worin $R_1$ bis $R_3$ Niederalkoxygruppen mit 1 bis 4, insbesondere 1 oder 2 C-Atomen sind, $R_4$ bis $R_6$ Alkylgruppen oder Arylgruppen mit 1 bis 24 C-Atomen sind, mit der Maßgabe, daß mindestens eine der Gruppen $R_4$ bis $R_6$ eine Alkylgruppe mit mindestens 10 C-Atomen ist, und X Phosphor oder Stickstoff und $Y^-$ ein Anion einer organischen oder anorganischen Säure ist, und n den Wert 1 bis 10 hat. Der Wert n = 3

wird bevorzugt. Es ist zwar bekannt, daß gewisse Verbindungen aus dieser Verbindungsklasse antimikrobiell wirksam sind, als Pflanzenschutzmittel oder Blattfungizide sind sie jedoch noch nicht bekannt geworden.

Die Wirkstoffe können in bekannter Weise hergestellt werden z.B. durch Umsetzung von 3-Chlorpropyltrimethoxysilan mit tertiären Aminen bei erhöhtem Druck in Methanol bei etwa 110 °C in etwa 4 Tagen.

Pflanzenphysiologisch verträgliche Salze der Ammoniumverbindungen sind z.B. Salze mit Anionen von Halogenwasserstoffsäuren, Hydrobromide, Hydrochloride; Sulfate, Phosphate; Salze mit Anionen von Alkylcarbonsäuren, Oxalate, Acetate, Formiate.

Der große Vorteil, vor allem der quaternären Ammoniumverbindungen ist, daß sie toxikologisch unbedenklich sind und voraussichtlich biologisch abgebaut werden können. Beispielsweise sind quaternäre Ammoniumverbindungen im Lebensmittelbereich als Desinfektionsmittel zugelassen. Mit Hilfe einiger dieser Verbindungen konnte in den voranstehend beschriebenen Versuchen ein Schutz vor Pilzbefall (Oidium/Botrytis Cin.) erreicht werden. Hierbei handelte es sich vor allem um solche Verbindungen, bei denen von den drei Alkylresten am quaternären Stickstoff einer mindestens acht bis zehn Kohlenstoffatome besitzt. Es wurde weiter gefunden, daß auch das Gegenion eine nicht unbedeutende Wirkung bei der Anwendung besitzt, obwohl möglicherweise im Vergleich zur Bedeutung des längeren Alkylrestes eine Differenzierung nur graduell möglich ist. Beispielsweise sind die Ergebnisse bei sonst gleichem Aufbau der Verbindung mit Acetat als Gegenion günstiger als mit Salicylat oder Chlorid. Im Grunde ist es jedoch so, daß mit Hilfe der neuartigen Technologie zur permanenten Haftung des Fungizids mittels der Trialkoxysilylgruppe jedes beliebige Fungizid verwendet werden kann. Voraussetzung ist lediglich eine Kopplung der toxiphoren Gruppe mit der Trialkoxysilylgruppe und darüberhinaus, daß das Fungizid auch im gebundenen Zustand antimikrobiell wirksam ist. Bei den voranstehend erwähnten Oniumverbindungen ist dies der Fall, wie umfangreiche Laboruntersuchungen unter Verwendung des Agarabklatschtests mit Botrytis und Aspergillus niger gezeigt haben.

Sowohl die Untersuchungen mit Reben als auch mit Blattpflanzen haben ergeben, daß das Wachstum von Pflanzen und Früchten durch die Fungizidschicht nicht beeinträchtigt wird. Damit erfüllt diese neuartige Technologie in Verbindung mit den hierzu verwendeten bzw. erforderlichen Fungistatika oder Fungizide alle Voraussetzungen für eine Anwendung in der Praxis. Die Vorteile sind vielfältiger Art:

1. Ökologisch gesehen erlaubt sie eine drastische Verminderung der Belastung von Boden und Grundwasser durch Pflanzenschutzmittel. Sie ist damit den bekannten Verfahren eindeutig überlegen. Dies gilt auch dann, wenn die Behandlung von Pflanzen und Früchten infolge des Wachstums ein zweites Mal wiederholt werden müßte. Hinzu kommt die zu erwartende biologische Abbaubarkeit bzw. Unschädlichkeit speziell der Oniumverbindungen in Boden und Wasser.

2. Von Seiten der Ökonomie ist die neuartige Technologie den bekannten Verfahren ebenfalls überlegen. Die einmalige oder zweimalige Ausbringung vermindert sowohl den Bedarf an Fungizid als auch den Aufwand für die Anwendung. Die Ausbringung kann in üblicher Weise nach dem Stand der Technik erfolgen.

Voranstehend wurde die neuartige Technologie vorzugsweise für die Behandlung an Reben betrachtet. Zweifelsohne ist dies ein wichtiges Anwendungsgebiet. Die Technologie ist jedoch nicht auf diese Pflanzen beschränkt, sie ist im Prinzip überall da anwendbar, wo bisher protektiv wirkende Fungizide eingesetzt wurden. Durch das Haften der Fungizidschicht sind die Früchte auch nach der Ernte zudem noch konserviert.

Die neuen Mittel zeichnen sich, allgemein ausgedrückt, durch eine hervorragende Wirksamkeit gegen ein breites Spektrum von pflanzenpathogenen Pilzen, insbesondere aus der Klasse der Ascomyceten und Basidiomyceten, aus. Sie können als Blatt- und Bodenfungizide eingesetzt werden.

Besonders interessant sind die fungiziden Verbindungen für die Bekämpfung einer Vielzahl von Pilzen an verschiedenen Kulturpflanzen oder ihren Samen, insbesondere Weizen, Roggen, Gerste, Hafer, Reis, Mais, Rasen, Baumwolle, Soja, Kaffee, Zuckerrohr, Obst und Zierpflanzen im Gartenbau, Weinbau sowie Gemüse - wie Gurken, Bohnen und Kürbisgewächse -.

Die neuen Mittel sind insbesondere geeignet zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,

Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die Mittel werden angettendet, indem man die Pflanzen mit den Wirkstoffen besprüht oder bestäubt oder die Samen der Pflanzen mit den Wirkstoffen behandelt. Die Anwendung erfolgt vor der Infektion der Pflanzen oder Samen durch die Pilze. Es werden die Pilze oder die vor Pilzbefall zu schützenden Pflanzen, Saatgüter, Materialien oder der Erdboden mit einer fungizid wirksamen Menge des Wirkstoffs behandelt.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.% Wirkstoff.

Die Aufwandmengen liegen je nach Art des gewünschten Effektes zwischen 0,02 und 3 kg Wirkstoff oder mehr je ha. Die neuen Verbindungen können auch im Materialschutz eingesetzt werden, z.B. gegen Paecilomyces variotii. Bei der Saatgutbehandlung werden im allgemeinen Wirkstoffmengen von 0,001 bis 50 g, vorzugsweise 0,01 bis 20 g, je Kilogramm Saatgut benötigt.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweiise durch Versprühen, Vernebeln, Verstäuben, Verstreuen, Beizen oder Gießen.

Die erfindungsgemäßen Mittel können in diesen Anwendungsformen auch zusammen mit anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Im folgenden werden einige der voranstehend erwähnten Verbindungen aufgeführt, die sich für die erfindungsgemäße Technologie besonders eignen: N-3-(Trimethoxysilyl)propyl-N,N-dimethyl-N-octadecylammoniumchlorid, N-3-(Trimethoxysilyl)-propyl-N-methyl-N,N-didecylammoniumchlorid, N-3-(Trimethoxysilyl)-propyl-N,N-dimethyl-N-decylammoniumchlorid, wobei anstelle des Chlorids als Gegenion ein organischer oder anorganischer Säurerest, wahlweise Acetat, Salicylat, Benzoat, Anthranilat, Propionat oder andere verwendet werden können.

Der Effekt der neuartigen Technologie soll im folgenden anhand typischer Anwendungsbeispiele unter Verwendung einiger Ammoniumverbindungen erläutert werden.

## Beispiel 1

Zum Schutz von Weinreben vor Pilzbefall (Botrytis cin./Oidium) wurden wäßrige Lösungen von N-[3-(Trimethoxysilyl)-propyl]-N,N-dimethyl-N-octadecyl-ammoniumchlorid als Fungizid mit Konzentrationen von 0,5; 1 und 2 % (Gew.-%) angesetzt. Mit diesen Lösungen wurden jeweils 10 Rebstöcke einer Rieslingtraube bei sonnigem Wetter auf konventionelle Weise gespritzt, und zwar unmittelbar nach Bildung der Weinbeeren. Nach Trocknung der Oberflächen von Beeren und Blättern konnte an den behandelten Beeren und Blättern ein leichter Glanz festgestellt werden, den unbehandelte Rebstöcke nicht zeigten.

Diesen Glanz behielten die behandelten Teile während des ganzen Sommers bei. Daraus kann

gefolgert werden, daß die Fungizidschicht auch durch stärkste Regenfälle bzw. durch Wettereinflüsse nicht zerstört wurde, ganz offensichtlich auch nicht durch das Wachstum von Beeren und Blättern. Die Schlußfolgerung, daß die Fungizidschicht fest haftet, ergab sich auch daraus, daß bis zwei bis drei Wochen vor der Ernte keinerlei Pilzbefall festgestellt werden konnte. Daraus läßt sich der weitere Schluß ziehen, daß die behandelten Pflanzen vor Pilzbefall geschützt waren, da bei nicht behandelten Referenzpflanzen bereits beginnendes Pilzwachstum beobachtet werden konnte. Bis zur Ernte der Trauben blieb dieser Unterschied zwischen behandelten oder unbehandelten Trauben bestehen, d.h. der Pilzbefall der behandelten Beeren war signifikant geringer als derjenige der unbehandel ten Beeren. Ein negativer Einfluß auf das Wachstum von Beeren und Blättern, gemessen an der Größe, konnte nicht beobachtet werden. Durch diese Versuchsergebnisse wird die fungistatische bzw. fungizide Wirkung der erfindungsgemäßen Fungizidschicht eindrucksvoll untermauert.

Die Trauben wurden geerntet und zu Wein verarbeitet. Dieser Wein wurde gaschromatographisch analysiert. Dabei waren im Wein keine Bestandteile der fungiziden Verbindung nachweisbar. Auswirkungen auf den Geschmack des Weines konnten ebenfalls nicht festgestellt werden.

Beispiel 2

Es wurden analoge Untersuchungen wie in Beispiel 1 durchgeführt, jedoch mit folgenden Änderungen:

1. Als Fungizid wurde N-[3-(Trimethoxysilyl)-propyl]-N-methyl-N,N-didecylammoniumchlorid verwendet.

2. Die Behandlung wurde etwa 4 Wochen vor der Ernte wiederholt.-

In diesem Falle wurden dieselben Beobachtungen wie in Beispiel 1 gemacht, allerdings mit der Ausnahme, daß bei den behandelten Rebstöcken der Pilzbefall zum Zeitpunkt der Ernte vernachlässigbar klein war.

**Ansprüche**

1. Fungizid für den Pflanzenschutz enthaltend einen festen oder flüssigen Trägerstoff und eine fungizid wirksame Menge einer Verbindung mit mindestens einem biostatisch oder biozid wirkenden Molekülteil und mindestens einem anderen Molekülteil mit einer Haftaffinität für die Pflanzenoberfläche.

2. Fungizid gemäß Anspruch 1, dadurch gekennzeichnet, daß der Molekülteil mit der Haftaffinität eine Silanverbindung ist.

3. Fungizid gemäß Anspruch 1 enthaltend eine Verbindung der Formel

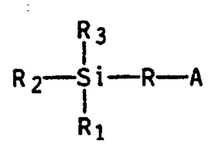

,

wobei $R_1$ bis $R_3$ Niederalkoxygruppen mit 1 bis 4 C-Atomen sind, R eine Alkylgruppe mit 1 bis 6 C-Atomen oder eine andere Gruppe ist, an der der fungistatisch oder fungizid wirkende Molekülteil A gebunden ist, und A der fungistatisch oder fungizid wirkende Molekülteil ist.

4. Fungizid gemäß Anspruch 1, dadurch gekennzeichnet, daß der biostatisch oder biozid wirkende Bestandteil A eine bekannte fungistatisch oder fungizid wirkende Gruppe ist, beispielsweise
ein Derivat von Organophosphorverbindungen;
Derivate von Carbamaten wie (Zn + Mn)-ethylen-1,2-bis-dithiocarbamat, Mangan-ethylen-1,2-bis-dithiocarbamat, Zink-dimethyldithiocarbamat;
Derivate von Carbonsäuren wie N-(1,1,2,2-Tetrachlorethyl-thio)-3a,4,7,7a-tetrahydrophthalimid;
Derivate von Harnstoff wie 1,2-Di-(3-methoxy-carbonyl-2-thioureido)-benzol, 1-/Cyano(methoximino)-acetat/-3-ethylharnstoff;
Derivate von heterocyclischen Verbindungen wie 2-(4-Thiazolyl)-benzimidazol, Methyl-benzimidazol-2-yl-carbamat, α(-2-chlorphenyl)-α-(4-fluorphenyl-5-pyridin-methanol, 1-/2-(2,4-Dichlorphenyl)-4-propyl-1,3-dioxolan-2-yl-methyl-triazol;
Derivate von Aniliden / Amiden wie 2,4,5-Trimethyl-3-furancarboxanilid
Derivate sonstiger Verbindungen wie Triphenyl-zinn-acetat, 2,6-Dimethyl-4-tridecyl-morpholin, 3-(3,5-Dichlorphenyl)-5-methyl-5-vinyl-1,3-oxazolidin-2,4-dion, 7-Brom-5-chlorchinolin-8-yl-acrylat, 4-/3-(p-Tert.-butylphenyl)-2-methylpropyl-2,6-cis-dimethymorpholin/, N-Propyl-N-/2-(2,4,6-trichlorophenoxy)ethyl/imdazol-1-carboxamid.

5. Fungizid gemäß Anspruch 1, dadurch gekennzeichnet, daß der fungistatisch oder fungizid wirkende Molekülteil A eine Oniumverbindung ist.

6. Fungizid für den Pflanzenschutz enthaltend einen festen oder flüssigen Trägerstoff und eine fungizid wirksame Menge einer Verbindung mit der Formel

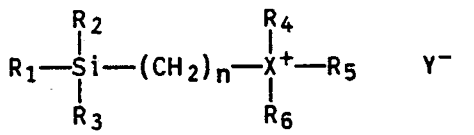 ,

worin $R_1$ bis $R_3$ Niederalkoxygruppen mit 1 bis 4 C-Atomen sind, $R_4$ bis $R_6$ Alkylgruppen oder Arylgruppen mit 1 bis 24 C-Atomen sind, mit der Maßgabe, daß mindestens eine der Gruppen $R_4$ bis $R_6$ eine Alkylgruppe mit mindestens 10 C-Atomen ist, und X Phosphor oder Stickstoff und $Y^-$ ein Anion einer organischen oder anorganischen Säure ist, und n den Wert 1 bis 10 hat.

7. Fungizid nach Anspruch 6, dadurch gekennzeichnet, daß $R_1$ bis $R_3$ Methoxy- oder Ethoxygruppen, $R_4$ und $R_6$ eine $C_1$- bis $C_4$-Alkyl- oder Phenylgruppe und $R_5$ eine $C_{10}$- bis $C_{24}$-Alkylgruppe oder $R_4$ und $R_6$ eine $C_8$- bis $C_{24}$-Alkylgruppe bedeutet und n = 1 bis 4 und Y = das Anion einer organischen oder anorganischen Säure ist.

8. Verfahren zur Bekämpfung von Pilzen, dadurch gekennzeichnet, daß man die Pilze oder die von Pilzbefall bedrohten Pflanzen, Saatgüter, Materialien oder den Erdboden behandelt mit einer fungizid wirksamen Menge einer Verbindung der Formel

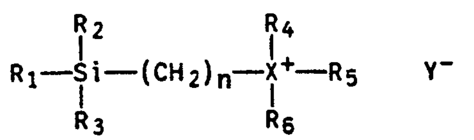 ,

worin $R_1$ bis $R_3$ Niederalkoxygruppen mit 1 bis 4 C-Atomen sind, $R_4$ bis $R_6$ Alkylgruppen oder Arylgruppen mit 1 bis 24 C-Atomen sind, mit der Maßgabe, daß mindestens eine der Gruppen $R_4$ bis $R_6$ eine Alkylgruppe mit mindestens 10 C-Atomen ist, und X Phosphor oder Stickstoff und $Y^-$ ein Anion einer organischen oder anorganischen Säure ist, und n den Wert 1 bis 10 hat.

9. Fungizid gemäß Anspruch 1 enthaltend N-[3-(Trimethoxysilyl)-propyl]-N-methyl-N,N-didecylammoniumchlorid.

10. Fungizid gemäß Anspruch 1 enthaltend N-[3-(Trimethoxysilyl)-propyl]-N,N-dimethyl-N-octadecylammoniumchlorid.

Europäisches Patentamt

**EUROPÄISCHER TEILRECHERCHENBERICHT,** der nach Regel 45 des Europäischen Patentübereinkommens für das weitere Verfahren als europäischer Recherchenbericht gilt

Nummer der Anmeldung
EP 89 11 9459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | WO-A-87 00 006 (AGRI-SHIELD)<br>* Seite 1, Zeilen 25-29; Seite 3, Zeilen 15-28; Seite 4, Zeilen 10-27; Seite 6, Zeilen 2-28; Beispiel IV * | 1-8, 10 | A 01 N 55/00<br>A 01 N 57/34 |
| Y | -- | 9 | |
| Y | EP-A- 108 853 (ST. E. KLEIN)<br>* Seite 1 - Seite 4, Zeile 9; Ansprüchen 1-4 *<br>---- | 9 | |

RECHERCHIERTE SACHGEBIETE (Int. Cl.4)

A 01 N

## UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.

Vollständig recherchierte Patentansprüche: 6-10
Unvollständig recherchierte Patentansprüche: 1-5
Nicht recherchierte Patentansprüche:
Grund für die Beschränkung der Recherche:

Siehe Blatt -B-

| Recherchenort | Abschlußdatum der Recherche | Prüfer |
|---|---|---|
| DEN HAAG | 30-01-1990 | MUELLNERS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument